Europäisches Patentamt

European Patent Office

Office européen des brevets

(11) Publication number: **0 267 636**
A1

## (12) EUROPEAN PATENT APPLICATION

(21) Application number: 87201951.8

(22) Date of filing: 12.10.87

(51) Int. Cl.⁴ **B01D 23/04 , B01D 36/04**

(30) Priority: 10.11.86 IT 6051086 U

(43) Date of publication of application:
18.05.88 Bulletin 88/20

(84) Designated Contracting States:
AT BE CH DE ES FR GB GR IT LI LU NL SE

(71) Applicant: **Cellini , Ferdinando**
**Via Percoto 11**
**I-33085 Maniago, PN(IT)**

(72) Inventor: **Cellini , Ferdinando**
**Via Percoto 11**
**I-33085 Maniago, PN(IT)**

(74) Representative: **Petraz, Gilberto Luigi**
**G.L.P. S.a.s. di Gilberto Petraz P.le Cavedalis**
**6/2**
**I-33100 Udine(IT)**

(54) Device to carry out sedimentation and collection of sludges.

(57) Device to carry out sedimentation and collection of sludges which is positioned in a required number on the bottom of a purification vessel (11) in cooperation with that bottom and comprises in its upper part an upper support (14) and in its lower part a lower support (18) connected rigidly (19) to the upper support (14), the supports (14-18) being suitable to bar and position a means (17) to collect sludges by sedimentation of the impurities contained in waste waters (22), the inlet opening of the upper support (14) determining the inlet opening of the means (17) collecting the sludges.

EP 0 267 636 A1

## "DEVICE TO CARRY OUT SEDIMENTATION AND COLLECTION OF SLUDGES"

This invention concerns a device to carry out sedimentation and collection of sludges in the treatment of household and industrial waste waters, the device being suitable to cooperate with appropriate lodgements in the bottom of vessels for the sedimentation of sludges.

In processes for the purification of waste waters many devices are known which are able to separate and collect a great part of the pollutants consisting of solid particles in concentrated aqueous suspensions (sludges).

Such devices may act by mechanical separation, that is to say, by the passage of the water to be purified through suitable means such as meshes, perforated steel plates, cloths, beds of granulated materials and like means.

Such means retain undissolved materials of sizes greater than a given value or materials having special physical and/or chemical properties.

Other devices act by gravity in sedimentation, flocculation and other processes where the pollutants can be separated from the liquid, thus exploiting differences of relative density as compared to the liquid.

In particular, the most widespread devices, whether employed in processes using mechanical separation or separation by gravity, consist of vessels or containers into which the waste water is caused to flow continuously or intermittently.

Such vessels or containers may act in one single step or in several step and be connected, or not connected, to successive purification devices, depending on the properties of the waste water or on the degree of purification required.

The sludges deposited have to be removed from the separation devices and this obtained by hand or with pumps or scrapers or other systems, which entail a great waste of time and/or high costs.

Next comes the problem of collecting such sludges and preparing them in suitable packages, as is necessary for their disposal or possible subsequent use.

Processes are known whereby the waste waters are caused to flow into a collection vessel at the bottom of which are provided outlets cooperating with means, such as bags or the like, which perform the separation and collection of sludges by filtration.

The filtered water is collected and discharged or is sent on to successive purification steps, while the bags are replaced when they have been filled and the sludge has been dewatered.

Such devices entail the drawback that the filtration performed is not efficient since the filtration capacity varies continuously during the filling of the filtering means.

In particular, if there is to be a successive purification step, the waste waters arriving for such successive treatment have continuously variable properties.

Moreover, since sludges have to be considerably dewatered when they are to be disposed of, the filter container, when filled, hinders adequate dripping of the water to be removed and a separate treatment process is required.

US 1,627,795 discloses an element performing filtration by sedimentation and having a lower discharge outlet. This filter element is fed by a delivery pipe. It serves only for hydraulic circuits and not for sedimentation vessels.

The present applicant has designed, tested and embodied the device according to the invention so as to obviate the above shortcomings.

The device according to the invention consists of a means for sedimentation and collection of sludges, for instance a bag, container or other means having a required filtration surface and connected to apparatus able to hold such means in any upright position.

Such means to collect sludges cooperates with a vessel, which treats waste waters and comprises in its bottom a lodgement into which such collection means is introduced.

The vessel may contain a plurality of lodgements arranged according to requirements, that is to say, in series, in parallel, in one row, in several rows or in other arrangements.

The waste water flows into the purification vessel continuously or intermittently and the sludges are deposited by sedimentation in the collection devices within the lodgements in the vessel.

The sedimentation and collection device according to the invention is equipped with apparatus able to prevent the waste water flowing into the lodgement of the vessel at the side of the device.

Such device comprises also upper attachment means to lift the bag, container or the like, and also lower means to support the same at its lower end.

The lower support means are also able to prevent or limit the entry of any deposits into the lodgement from the bottom of the vessel when the bag, container or the like is lifted out.

The device of the invention in its lifted position is suitable to obtain dewatering of the sludges.

The invention is therefore embodied with a device to carry out sedimentation and collection of sludges according to the content of Claim 1 and the claims connected thereto.

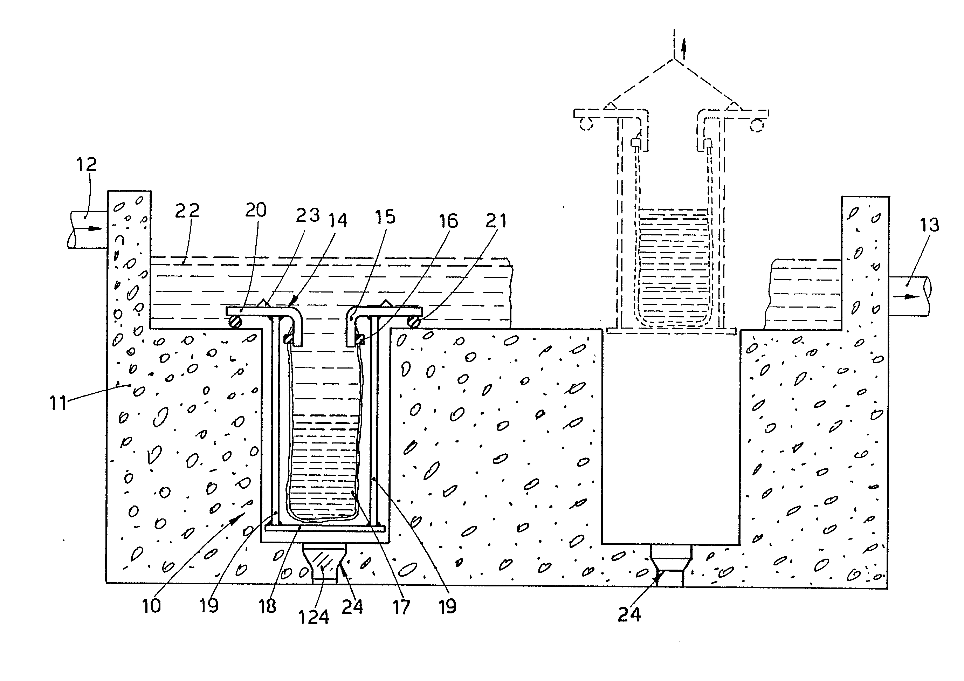

The attached figure, which is given as a non-restrictive example, shows diagrammatically a device according to the invention in a side view.

In the attached figure one or more lodgements 10 are comprised in the bottom of a purification vessel 11, an inlet for water to be treated being referenced with 12 whereas 13 indicates an outlet for clarified water.

A device according to the invention comprises at its upper end an upper support 14, which in this case has a substantially L-shaped section.

The inlet opening of the upper support 14 determines the inlet opening of a sludge collection means 17.

On an inner wing 15 of the upper support 14 is secured by a resilient means 16 the open end of the sludge collection means 17, which may be a bag, container or the like.

The sludge collection means 17 rests at its lower end on a lower support 18 connected to the upper support 14 with tie rods 19.

The upper support 14 comprises on the lower surface of its outer wing 20 annular means 21 to retain liquid 22 in the vessel 11.

Means 23 to lift the device from the lodgement 10 are included on the upper surface of the outer wing 20 of the upper support 14.

During lifting of the device, when the material collected by sedimentation 124 has reached the required level in the sludge collection means 17 and after the clarified water has been discharged from the vessel 11, the lower support 18 skims the inner surface of the lodgement 10 and prevents any residual sludge in the bottom of the vessel 11 from arriving at the bottom of the lodgement 10.

In any event an outlet 24 is always provided for any cleaning of the bottom of the lodgement 10.

In its raised position, which is shown with lines of dashes in the figure, the device is suitable for the dewatering of the material deposited by sedimentation 124 in the sludge collection means 17 and lifted above or outside the vessel 11 and for the successive replacement of the sludge collection means 17. 27

## Claims

1 - Device to carry out sedimentation and collection of sludges which is characterized in that it is positioned in a required number on the bottom of a purification vessel (11) in cooperation with that bottom and comprises in its upper part an upper support (14) and in its lower part a lower support (18) connected rigidly (19) to the upper support (14), the supports (14-18) being suitable to bear and position a means (17) to collect sludges by sedimentation of the impurities contained in waste waters (22), the inlet opening of the upper support (14) determining the inlet opening of the means (17) collecting the sludges.

2 - Device as claimed in Claim 1, which cooperates with individual lodgements (10) included in the bottom of the purification vessel (11).

3 - Device as claimed in Claim 1 or 2, which comprises annular retaining means (21) on the upper support (14).

4 - Device as claimed in any claim hereinbefore, which comprises a lifting means (23) in its upper part.

5 - Device as claimed in any claim hereinbefore, in which the sludge collection means (17) dewaters the material deposited by sedimentation (24) when the device has been lifted out of the lodgement (10).

6 - Device as claimed in any claim hereinbefore, in which the lodgement (10) comprises an outlet (24) at its bottom.

7 - Device as claimed in any claim hereinbefore, in which the periphery of the lower support (18) cooperates with the inner perimeter of the lodgement (10).

0 267 636

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| A | US-A-1 627 795 (MANNING)<br><br>* Pages 1-3 * | 1,3,5-7 | B 01 D 23/04<br>B 01 D 36/04 |
| A | DE-A-1 039 495 (H. KOPPERS)<br>* Columns 3,4 * | 1,4-6 | |
| A | DE-A- 75 793 (BERNH. GERRITZEN)<br>* Page 1 * | 1 | |
| A | FR-A-2 420 363 (SOAF)<br><br>* Page 3, lines 31-36; page 4 * | 1-3,5,6 | |
| A | US-A-2 155 960 (H.S. THOMAS)<br><br>* Page 2, left-hand column, lines 29-60 * | 1,2,5,6 | **TECHNICAL FIELDS SEARCHED (Int. Cl.4)**<br><br>B 01 D |
| A | GB-A-1 535 738 (B. BLACKBURN BAREFOOT) | | |

The present search report has been drawn up for all claims

| Place of search | Date of completion of the search | Examiner |
|---|---|---|
| THE HAGUE | 06-11-1987 | DE PAEPE P.F.J. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82